# EUROPEAN PATENT SPECIFICATION

(11) **EP 0 964 196 B1**
(45) Date of publication and mention of the grant of the patent: **25.02.2004**
(21) Application number: 98830363.2
(22) Date of filing: 12.06.1998
(51) Int. Cl.: F16L 5/04

(54) **Water-tight, fire-resistant bulkhead passages or bridges**
Wasserdichte, feuerbeständige Durchführungsöffnungen
Cloisons étanches et résistantes au feu

(43) Date of publication of application: 15.12.1999
(73) Proprietor: Chibro S.p.A., 22100 Como (IT)
(72) Inventor: Pavan, Marcello, 22100 Como (IT)
(74) Representative: Lecce, Giovanni

(56) References cited:
- FR-A- 2 674 929
- GB-A- 1 546 786
- GB-A- 2 216 220
- US-A- 4 984 308

## Description

The present invention relates to water-tight and fire-resistant bulkhead passages or bridges for off-shore platforms and/or compartment-rooms in general. They are substantially constituted by flanged metal parts suitable to ensure a correct and strong engagement of continuous pipes which go through bulkheads or bridges, and by elastic and intumescent thermo-expanding parts, suitable to ensure that said coupled components are mutually water-tight and fire-resistant. The metal parts, suitably composed with the water- and heat-tight parts, connect with the external sound surfaces of pipes and the surfaces of bulkheads, in correspondence of pre-obtained passages on said bulkheads by means of direct mechanical lockings that do not require welding operations.

Until a few years ago, the water-tight passages of pipes in general through bulkheads or bridges were substantially realised by welding pipes in continuity with walls, wherein the corresponding passage holes had been already obtained to measure. In other solutions, ducts were already positioned in the inside of other protection pipes welded to walls with continuous configurations of the aforementioned type. A further formation system for bulkhead passages or bridges used at present is comprised of a combination of tubes, sleeves and coverings.

Tubes may be obtained from the material that is most suited to the specific end use; sleeves are welded to tubes and act as supporting saddles for the external covering; the latter is from the same material as the bulkhead or bridge to which it is welded and constitutes the element that ensure water-tightness.

Water-tight and fire-resistant bulkhead passages or bridges are known from GB-A-1 546 786 and FR-A-2 674 929.

However, the known tight-passages suffer many undesired drawbacks. In particular, the problems are well-known that have to be tackled in the realisation of such works in compartment-spaces in general and, more specifically, in onboard naval spaces and on off-shore platforms, wherein the requirements of a full water-tightness must be combined and compatible with the requirement of a full fire-resistance. At present, such conditions are achievable only through high costs of material preparation, pre-assembly and mounting, with long operation times and the utmost carefulness, both because of the complexity of said assemblies and the fact that much work must be carried out directly onboard, in small and/or closed spaces wherein conditions of constant risk exist for the operators, arising from possible gas concentrations and the use of welding free flames.

Object of the present invention is to eliminate the above drawbacks.

A water-tight and fire resistant bulkhead passage or bridge according to the features of the preamble of claim 1 is known from GB-A-1 546 786.

The water-tight and fire resistant bulkhead passage or bridge of the present invention is characterised in that the first flange is coupled, on its side opposite with respect to the counter-flange, to a second small flange; said first and second flanges forming, in correspondence of the rounded-off comers of the adjoining edges in their coaxial coupling with the pipe, at least one seat wherein a water-tight elastic ring is arranged generating a circumferential water-tightness on the pipe when the first and the second flanges are approached and tightened to one another.

By the water-tight and fire resistant bulkhead passage or bridge of the present invention the following results are obtained: the locking metal parts and the water-tight fire-resistant parts arc independent on the bulkheads and the unflanged pipes that must be combined with each other; the aforesaid metal and water-tight fire-resistant parts are pre-assembled and site-mounted only on the assembly of unflanged pipes through the bulkheads, with following entirely and merely mechanical locking; the mechanical coupling of the metal flanged parts with tightening of the same by conventional means, such as stud bolts, screws and the like; pre-assembled pipes provided with end-flanges are pre-assembled by small intermediate integral flanges; the tightening of the flanged metal parts causes the corresponding adhesion of both the water-tight elastic means and the fire-resistant thermo-expanding means; the water-tight means are from gummy elastic material and the fire-resistant means are from intumescent thermo-expanding material having a high ratio of expansion and high resistance-to both flames and water.

The advantages achieved by the present invention lie essentially in that the tightening means are coupleable with bulkheads and pipes at the time of their engagement, without needing any further welding operations onboard, but only utilising conventional tightening mechanical means for stud bolts, screws and the like, with obvious savings in pre-assembly and assembly times, savings in materials and complete exclusion of environment risks for the operators. In substance, the invention realises a mechanical continuity between pipes and bulkheads or bridges, and realises also water-tightness and fire-resistance, without having recourse to welding, but utilising only means having a very simple mechanical structure and of easy and quick application. The whole ensures in any case the perfect continuity of the tubular distribution networks in spaces that are particularly exposed to fire and flooding risks, as are onboard naval spaces, off-shore platform spaces and/or compartment-spaces in general.

The invention will be now described in detail hereunder, according to embodiments expounded only by way of non limiting example, with reference to the attached drawings, wherein:
Figure 1 is the off-set cross-section of a water-tight fire-resistant bulkhead passage or bridge for unflanged pipes;
Figure 2 is a partial front view of a water-tight fire-resistant bulkhead passage or bridge for unflanged pipes; and
Figure 3 is the cross-section of a water-tight fire-resistant bulkhead passage or bridge for pipes provided with pre-assembled end-flanges.

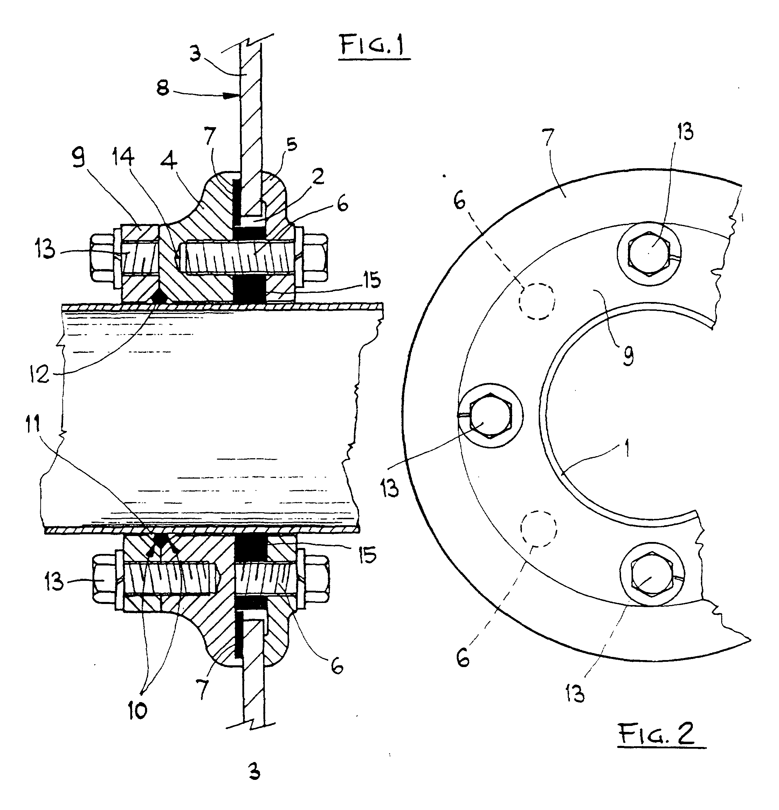

Figure 1 and 2 show a water-tight fire-resistant passage for a pipe (1) without end-flanges. In correspondence of hole (2) obtained on bulkhead or bridge (3) for the passage of the continuous pipe (1), a primary flange (4) and a counter-flange (5) of the same are positioned, that couple and engage mutually and peripherally, astride the thickness of the bulkhead, while in the middle they arrange according to a co-axial adjoining alignment relation with pipe (1). Along an intermediate circumference, flange (4) and counter-flange (5) comprise a same number of aligned holes through which their coupling and locking means (6) are positioned. In at least one of the flanges, for instance in the primary flange (4), there is provided at least a restraint seat for a circumferential gasket (7) which, engaged and pressed between the flat surface of a side (8) of said bulkhead (3) and the plane of the same restraint seat, constitutes a first peripheral elastic water-tight element when said flange (4) and counter-flange (5) are tightened with each other against the opposite planes of bulkhead (3), exactly astride its thickness and close to the peripheral edge of hole (2). On the opposite site of counter-flange (5) the primary flange (4) couples to a second small flange (9) with which it forms, in correspondence of the rounded-off corners (10) of the adjoining edges for their co-axial coupling of pipe (1), at least a seat (11) for an elastic ring (12). Said ring (12) constitutes a second water-tight barrier which develops along the circumferential surface of said pipe. In the same way as indicated for the coupling of the primary flange (4) with counter-flange (5), also for the coupling of said primary flange (4) with the small flange (9), there is provided a same number of aligned holes, located along an intermediate circumference through which their coupling means (13) are positioned. During the tightening of means (13), flange (4) and the small flange (9) are approached to one another, causing a radial squashing on the elastic ring (12) that generates the circumferential water-tightness on pipe (1).

The coupling and tightening means (6) and (13) may be of any known type, such as stud bolts, bolts, screws and the like. In any case, there are preferred those couplings wherein the aligned holes obtained on the primary flange (4) are blind threaded holes (14), so as to prevent any possibility of fluid seepages and/or leaks through the same. For this reason, also the arrangement of aligned holes for the coupling means (6) for the primary flange (4) and counter-flange (5) is off-set with respect to the opposite aligned holes for the coupling means (13) for the same primary flange (4) and the small flange (9).

The flat gasket(s) (7) and the annular gasket(s), preferably of the so-called O-Ring type, are realised from gummy elastic materials, such as for instance elastomers and the like, while the metal parts of the flanges and the locking means are preferably from stainless steel or any other suitable metal, depending on the specific requirements. Thanks to the above described means, it is possible to obtain a water-tightness of up to 20-25 bars between the bulkhead passages or bridges.

In the space of the passage hole (2) comprised between the tightened coupling of the primary flange (4) with the counter-flange (5), and free from the flat water-gasket (7) there is instead engaged and tied at least a gasket (15) made from a particular intumescent thermo-expanding material based on graphite and silico-aluminous components, and the like, specifically suitable for the formation of fire-stop protection barriers; in the presence of fires and therefore of high temperatures, the material of said gasket(s) can expand and increase in volume up to about 14 times, with a pressure of at least 3,5 bars at the temperature of about 150°C, so as to entirely close any cracks, slots or passages though which fire flames might spread and develop.

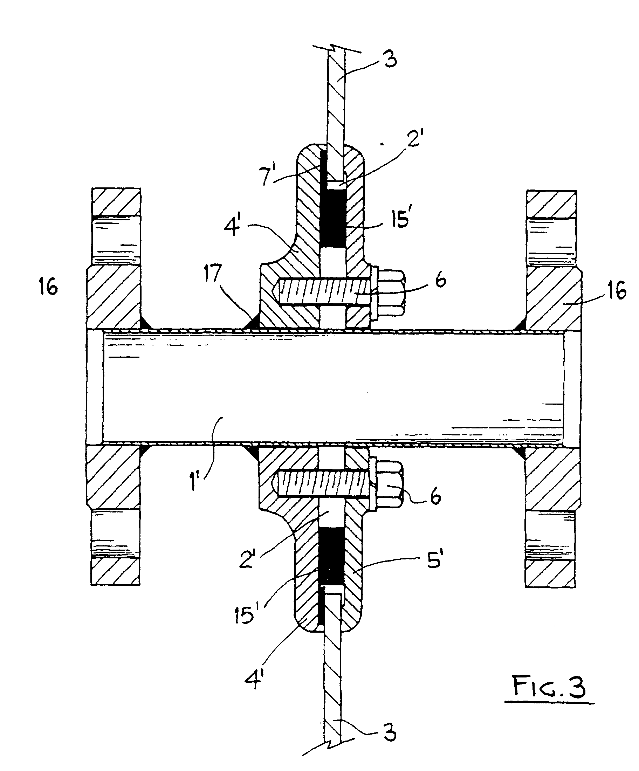

Figure 3 shows a second type of tight-passage which, based on the same conceptual philosophy of the invention, is specifically designed for applications wherein pipes (1') are provided with end flanges (16) already pre-assembled and welded to the same. In this specific case, it is obvious that the passage hole (2') obtained in the bulkhead or bridge (3) must have a diameter at least slightly greater than that of one of flanges (16), to allow its emplacement passage. As a consequence, also the diameters of the primary flanges (4') and counter-flange (5') must be proportionally increased, in order to allow their tight-coupling with the opposite surfaces of bulkhead (3), close to the periphery of hole (2'); in the same way, also the diameter of the flat gasket(s) for the peripheral water-tightness, and also, possibly, the diameter of the fire-resistant gasket(s) from intumescent thermo-expanding material (15'), which engage in the intermediate free space of hole (2') comprised between bulkhead (3) and pipe (1'), must be proportionally increased. There can be on the contrary eliminated the part concerning the annular gasket(s) on the periphery of pipe (1') with the related small flange and tightening means, as in the specific case and due to the welded end flanges (16) being already present, also the primary flange (4) is already positionable, with pre-assembly and circumferential welding on pipes (1') before the on site assembly of pipe (1'). In such case, the same welding (17) actually water-tights the pipe, while the flat gasket (7'), adequately located and engaged on flange (4'), provides to the peripheral tightness in the already described manner. On the contrary, due to their having to be mounted in a subsequent stage in correspondence of the opposite side of bulkhead (3), counter-flange (5') and gasket (15') from intumescent thermo-expanding material, are necessarily realised in two halves to allow their on site emplacement, coupled to each other around pipe (1') according to a configuration substantially corresponding to the already described one, and to allow for their connection to bulkhead and flange (4') with the same tightening means (6). The subdivision into two halves of said details does not give rise to any problems concerning the desired water-tightness and fire-resistance, as the fist one is ensured in any case by the continuity of gasket (7') engaged in flange (4') and adhering to wall (8) of the bulkhead by the tightening of means (6), and the second one is ensured in any case thanks, obviously, to its obliged location in space (2') by tightening means (6) and by the intrinsic ability of the intumescent thermo-expanding material which gasket (15') is made from, which in the presence of heat can increase in volume up to about 14 times, with obvious compacting and sealing of the residual interspace due to the approaching of said halves. A similar arrangement may be anyhow realised with an inverted structure wherein counter-flange (5') is made up by one only piece welded to pipe (1'), with incorporated seat and peripheral water-gasket (7'), while flange (4') is realised in two halves and couples, together with the two halves of gasket (15') around pipe (1'), in the already described manner. In both cases, also said whole is simple and economical, facilitates the assembly of bulkhead passages and bridges, and keeps the special characteritics of the invention.

Even though the present invention has been described and illustrated according to embodiments reported only by way of non limiting example, those skilled in the art will easily understand that various modifications in structures, details, assemblies, arrangements, orientations, part combination and configuration in general may be introduced without departing from its scope and object.

## Claims

1. A water-tight and fire resistant bulkhead passage or bridge comprising a pipe (1, 1') extending through a passage hole (2, 2') obtained on the bulkhead or bridge (3), a first metal flange (4, 4') and a counter flange (5, 5'), elastic water-tight elements and fire-resistant elements from intumescent thermo-expanding material, combined with each other to form a sealing barrier astride the thickness of the bulkhead or bridge and around the external diameter of the pipe (1, 1') by coupling and tightening means (6) of an entirely mechanical type, whereby the elastic water-tight element is a circumferential gasket (7, 7') arranged in at least one restraint seat provided in at least one (4, 4') of the flanges and pressed between the surface of a side (8) of the bulkhead or bridge (3) and a plane of said restraint seat when the first metal flange (4, 4') and the counter flange (5, 5') are tightened with the planes of said bulkhead or bridge (3), and the fire-resistant element from intumescent thermo-expanding material is at least one gasket (15, 15') engaged and tied in the space of the passage hole (2) comprised between the tightened coupling of the metal flange elements and free from the water-tight gasket (7, 7'), **characterised in that** the first flange (4) is coupled, on its side opposite with respect to the counter-flange (5), to a second small flange (9); said first (4) and second (9) flanges forming, in correspondence of the rounded-off comers (10) of the adjoining edges in their coaxial coupling with the pipe (1), at least one seat (11) wherein a water-tight elastic ring (12) is arranged generating a circumferential water-tightness on the pipe (1) when the first (4) and the second (9) flanges are approached and tightened to one another.

2. The water-tight and fire resistant bulkhead passage or bridge according to claim 1, **characterised in that** the first metal flange (4, 4') and the counter flange (5, 5') are tightened with each other against the opposite planes of the bulkhead or bridge (3).

3. The water-tight and fire resistant bulkhead passage or bridge according to claim 1 or 2, **characterised in that** the first (4) and the second (9) flanges are coupled and tightened to one another by coupling and tightening means (13) of mechanical type inserted into aligned holes located along an intermediate circumference,

4. The water-tight and fire resistant bulkhead passage or bridge according to anyone of the preceding claims, **characterised in that** the holes obtained on the first flange (4) for the coupling and tightening means (6, 13) are blind threaded holes (14) and the holes for the coupling and tightening means (6) for the first flange (4) and the counter-flange (5) is off-set with respect to the opposite holes for the coupling and tightening means (13) for the first flange (4) and the second flange (9).

5. The water-tight and fire resistant bulkhead passage or bridge according to anyone of the preceding claims, **characterised in that** the gasket (15, 15') is made from an intumescent thermo-expanding material based on graghite and silico-aluminous components which, at a temperature of about 150°C, expands and increases its volume.

6. The water-tight and fire resistant bulkhead passage or bridge according to claim 1, **characterised in that** the pipes (1) are provided with end flanges (16) having a diameter and the passage hole (2') has a diameter greater than the diameter of the end flange (16).

7. The water-tight and fire resistant bulkhead passage or bridge according to claim 6, **characterised in that** the first flange (4') is preassembled and fixed by circumferential welding (17) on the pipe (1').

8. The water-tight and fire resistant bulkhead passage or bridge according to anyone of the preceding claims 6 and 7, **characterised in that** the counter-flange (5') and the gasket (15') from intumescent thermo-expanding material are realised in two halves.

9. The water-tight and fire resistant bulkhead passage or bridge according to the preceding claim 6, **characterised in that** the counter-flange (5') is preassembled and fixed by circumferential welding (17) on the pipe (1') and the first flange (4') and the gasket (15') from intumescent thermo-expanding material are realised in two halves.

## Patentansprüche

1. Wasserdichte(r) und feuerbeständige(r) Schottwanddurchgang oder Brücke umfassend eine Leitung (1, 1'), die sich durch ein Durchgangsloch (2, 2') erstreckt, das auf der Schottwand oder Brücke (3) vorgesehen ist, einen ersten Metallflansch (4, 4') und einen Gegenflansch (5, 5'), elastische wasserdichte Elemente und feuerbeständige Elemente aus anschwellendem, thermoexpandierendem Material, die miteinander kombiniert sind, um eine Dichtungsbarriere rittlings der Dicke der Schottwand oder Brücke und um den äußeren Durchmesser der Leitung (1,1') herum durch koppelnde und spannende Einrichtungen (6) von vollständig mechanischer Art zu bilden, wodurch das elastische wasserdichte Element eine umfängliche Dichtung (7,7') ist, die in zumindest einem Rückhaltesitz angeordnet ist, der in zumindest einem (4,4') der Flansche vorgesehen und zwischen der Oberfläche einer Seite (8) der Schottwand oder Brücke (3) und einer Fläche des Rückhaltesitzes gepresst ist, wenn der erste Metallflansch (4, 4') und der Gegenflansch (5,5') an die Flächen der Schottwand oder Brücke (3) gespannt sind, und wobei das feuerbeständige Element aus anschwellendern, thermoexpandierendern Material zumindest eine Dichtung (15,15') ist, die in den Raum des Dutchgangsraumes (2) eingreift und in diesen eingepasst ist, der zwischen der gespannten Kopplung der Metallflanschelemente umfasst und frei von der wasserdichten Dichtung (7,7') ist, **dadurch gekennzeichnet, dass** der erste Flansch (4) an seiner bezüglich des Gegenflansches (5) gegenüberliegenden Seite an einen zweiten kleinen Flansch (9) gekoppelt ist; wobei erster (4) und zweiter (9) Flansch in Übereinstimmung mit den abgerundeten Ecken (10) die aneinandergrenzenden Kanten in deren koaxialer Kopplung mit der Leitung (1) zumindest einen Sitz (11) bilden, wobei ein wasserdichter elastischer Ring (12) angeordnet ist, der eine umfängliche Wasserdichtheit auf der Leitung (1) erzeugt, wenn der erste (4) und der zweite (9) Flansch aneinander angenähert und gespannt sind.

2. Wasserdichte(r) und feuerbeatändige(r) Schottwanddurchgang oder Brücke gemäß Ansspruch 1, **dadurch gekennzeichnet, dass** der erste Metallflansch (4, 4') und der Gegenflansch (5,5') aneinander gegen die gegenüberliegenden Flächen der Schottwand oder Brücke (3) gespannt sind.

3. Wasserdichte(r) und feuerbeständige(r) Schottwanddurchgang oder Brücke gemäß Anspruch 1 oder 2, **dadurch gekennzeichnet, dass** der erste (4) und der zweite (9) Flansch, durch Kopplungs- und Spanneinrichtungen (13) von mechanischer Art aneinander gekoppelt und gespannt sind, welche in ausgerichtete Löcher eingesetzt sind, die entlang eines Zwischenumfangs angeordnet sind.

4. Wasserdichte(r) und feuerbeständige(r) Schottwanddurchgang oder Brücke gemäß einem der vorhergehenden Ansprüche, **dadurch, gekennzeichnet, dass** die Löcher, die auf dem ersten Flansch (4) für die Kopplungs- und Spanneinrichtungen (6, 13) vorgesehen sind, mit Gewinde versehene Grundlöcher (14) sind, und dass die Löcher für die Kopplungs- und Spanneinrichtungen (6) für den ersten Flansch (4) und den Gegenflansch (5) bezüglich der gegenüberliegenden Löcher für die Kopplungs- und Spanneinrichtungen (13) für den ersten Flansch (4) und den zweiten Flansch (9) versetzt sind.

5. Wasserdichte(r) und feuerbeständige(r) Schottwanddurchgang oder Brücke gemäß einem der vorhergehenden Ansprüche, **dadurch gekennzeichnet, dass** die Dichtung (15, 15') aus einem anschwellendem, thermoexpandierendern Material hergestellt ist, das auf Graphit und Siliko-Aluminiumhaltigen Komponenten basiert, welche bei einer Temperatur von etwa 150°C expandiert und sein Volumen vergrößert.

6. Wasserdichte(r) und feuerbeständige(r) Schottwanddurchgang oder Brücke gemäß Anspruch 1, **dadurch gekennzeichnet, dass** die Leitungen (1) mit Endflanschen (16) versehen sind, die einen Durchmesser aufweisen, und das Durchgangsloch (2') einen Durchmesser aufweist, der größer als der Durchmesser des Endflansches (16) ist

7. Wasserdichte(r) und feuerbeständige(r) Schottwanddurchgang oder Brücke gemäß Anspruch 6, **dadurch gekennzeichnet, dass** der erste Flansch (4') durch umfängliches Schweissen (17) auf der Leitung (1') vormontiert und fixiert wird.

8. Wasserdichte(r) und feuerbeständige(r) Schottwanddurchgang oder Brücke gemäß einem der vorhergehenden Ansprüche 6 und 7, **dadurch gekennzeichnet, dass** der Gegenflansch (5') und die Dichtung (15') aus anschwellendem, thermoexpandierendem Material in zwei Hälften gefertigt ist.

9. Wasserdichte(r) und feuerbeständige(r) Schottwanddurchgang oder Brücke gemäß dem vorhergehenden Anspruch 6, **dadurch gekennzeichnet, dass** der Gegenflansch (5') durch umfängliches Schweissen (17) auf der Leitung (1') vormontiert und befestigt wird und der erste Flansch (4') und die Dichtung (15) aus anschwellendem, thermoexpandierendern Material in zwei Hälften gefertigt ist.

## Revendications

1. Passerelle ou passage de cloison étanche à l'eau et résistant au feu comprenant un tuyau (1, 1') s'étendant à travers un trou de passage (2, 2') obtenu sur la cloison ou la passerelle (3), un premier rebord en métal (4, 4') et un contre-rebord (5, 5'), des éléments élastiques étanches à l'eau et des éléments résistants au feu dans un matériau intumescent à dilatation thermique, combinés les uns avec les autres pour former une barrière d'étanchéité, à califourchon, de l'épaisseur de la cloison ou de la passerelle et autour du diamètre extérieur du tuyau (1, 1') par des moyens d'accouplement et de serrage (6) d'un type entièrement mécanique, de manière que l'élément élastique étanche à l'eau soit un joint d'étanchéité circonférentiel (7, 7') agencé dans au moins un siège de retenue situé dans au moins l'un (4, 4') des rebords et pressé entre la surface d'un côté (8) de la cloison ou de la passerelle (3) et un plan dudit siège de retenue lorsque le premier rebord en métal (4, 4') et le contre-rebord (5, 5') sont serrés avec les plans de ladite cloison ou passerelle (3), et l'élément résistant au feu dans un matériau intumescent à dilatation thermique est au moins un joint d'étanchéité (15, 15') engagé et fixé dans l'espace du trou de passage (2) compris entre les moyens d'accouplement serrés des éléments de rebords en métal et exempt du joint d'étanchéité étanche à l'eau (7, 7'), **caractérisé(e) en ce que** le premier rebord (4) est couplé, sur son côté à l'opposé du contre-rebord (5), à un deuxième petit rebord (9) ; lesdits premier (4) et deuxième (9) rebords formant, en correspondance, des coins arrondis (10) des bords adjacents dans leur accouplement coaxial avec le tuyau (1), au moins un siège (11) dans lequel un anneau élastique étanche à l'eau (12) est agencé, produisant une étanchéité à l'eau circonférentielle sur le tuyau (1) lorsque les premier (4) et deuxième (9) rebords sont rapprochés et serrés l'un avec l'autre.

2. Passerelle ou passage de cloison étanche à l'eau et résistant au feu selon la revendication 1, **caractérisé(e) en ce que** le premier rebord en métal (4, 4') et le contre-rebord (5, 5') sont serrés l'un avec l'autre contre les plans opposés de la cloison ou passerelle (3).

3. Passerelle ou passage de cloison étanche à l'eau et résistant au feu selon la revendication 1 ou 2, **caractérisé(e) en ce que** les premier (4) et deuxième (9) rebords sont couplés et serrés l'un contre l'autre par des moyens d'accouplement et de serrage (13) de type mécanique insérés dans des trous alignés situés le long d'une circonférence intermédiaire.

4. Passerelle ou passage de cloison étanche à l'eau et résistant au feu selon l'une quelconque des revendications précédentes, **caractérisé(e) en ce que** les trous obtenus sur le premier rebord (4) pour les moyens d'accouplement et de serrage (6, 13) sont des trous taraudés borgnes (14) et les trous pour les moyens d'accouplement et de serrage (6) pour le premier rebord (4) et le contre-rebord (5) sont décalés par rapport aux trous opposés pour les moyens d'accouplement et de serrage (13) pour le premier rebord (4) et le deuxième rebord (9).

5. Passerelle ou passage de cloison étanche à l'eau et résistant au feu selon l'une quelconque des revendications précédentes, **caractérisé(e) en ce que** le joint d'étanchéité (15, 15') est fait d'un matériau intumescent à dilatation thermique à base de graphite et de composants silico-alumineux qui, à une température d'environ 150°C, se dilate et augmente de volume.

6. Passerelle ou passage de cloison étanche à l'eau et résistant au feu selon la revendication 1, **caractérisé(e) en ce que** les tuyaux (1) sont pourvus de brides d'extrémité (16) ayant un diamètre et le trou de passage (2') a un diamètre supérieur au diamètre de la bride d'extrémité (16).

7. Passerelle ou passage de cloison étanche à l'eau et résistant au feu selon la revendication 6, **caractérisé(e) en ce que** le premier rebord (4') est pré-assemblé et fixé par un soudage circonférentiel (17) sur le tuyau (1').

8. Passerelle ou passage de cloison étanche à l'eau et résistant au feu selon l'une quelconque des revendications précédentes 6 ou 7, **caractérisé(e) en ce que** le contre-rebord (5') et le joint d'étanchéité (15') en un matériau intumescent à dilatation thermique sont réalisés en deux moitiés.

9. Passerelle ou passage de cloison étanche à l'eau et résistant au feu selon la revendication précédente 6, **caractérisé(e) en ce que** le contre-rebord (5') est pré-assemblé et fixé par un soudage circonférentiel (17) sur le tuyau (1') et le premier rebord (4') et le joint d'étanchéité (15') en un matériau intumescent à dilatation thermique sont réalisés en deux moitiés.
